# EUROPEAN PATENT SPECIFICATION

(11) **EP 2 005 715 B1**
(45) Date of publication and mention of the grant of the patent: **31.03.2010**
(21) Application number: 06768378.9
(22) Date of filing: 24.07.2006
(51) Int. Cl.: H04M 1/02, H04B 1/38

(54) **PORTABLE TERMINAL DEVICE**
TRAGBARE ENDGERÄTEEINRICHTUNG
DISPOSITIF DE TERMINAL PORTABLE

(30) Priority: 13.04.2006 JP 2006111265
(43) Date of publication of application: 24.12.2008
(73) Proprietor: Panasonic Electric Works Co., Ltd., Kadoma-shi Osaka 571-8686 (JP)
(72) Inventor: OKA, Hideki, Kadoma-shi, Osaka 571-8686 (JP); YAMAMOTO, Koji, Kadoma-shi, Osaka 571-8686 (JP); MAEDA, Yutaka, Kadoma-shi, Osaka 571-8686 (JP); OYA, Akira, Kadoma-shi, Osaka 571-8686 (JP); MASUDA, Hirokazu, Kadoma-shi, Osaka 571-8686 (JP); YOON, John, Carlsbad, California 92009 (US); KRUGER, Kraig, Colorado 80301 (US)
(74) Representative: Appelt, Christian W.
(86) International application number: PCT/JP2006/315069
(87) International publication number: WO 2007/122747

(56) References cited:
- EP-A2- 1 193 889
- FR-A- 2 811 185
- US-A1- 2002 118 826

## Description

### TECHNICAL FIELD

The present invention relates to a portable terminal device such as mobile phone, which is operable in a connecting state with a memory card such as SIM card and a battery.

### BACKGROUND ART

In recent years, potable terminal devices such as PDA (Portable Digital Assistants) and mobile phones, to which a memory card is detachably connected, have become widely used. However, since the memory card is generally configured in a thin sheet, physical damage to the memory card is easily caused when the memory card is inserted into or removed from the portable terminal device. In addition, when the memory card is removed from the portable terminal device in operating state, corruption of data stored in the memory card may occur.

For example, Japanese Patent Early Publication [kokai] No. 2005-84703 discloses a memory card holding mechanism for preventing accidental falling of the memory card from a cellular phone. This holding mechanism is formed with a housing having an opening at its one side, through which the memory card is inserted into the housing, a first plate spring provided at a side of the housing and having a claw at its top end, a second plate spring provided at a front surface of the housing and having a claw at its top end. These claws are spring-biased inward by elastic forces of the first and second plate springs. When the memory card is inserted into a required position in the housing, these claws are engaged to an end portion of the memory card to prevent the memory card from accidental falling. In addition, since the memory card receives a spring force in a direction of taking out the memory card from the housing by a spring through a card receiver, the memory card is stably held between the claws and the card receiver.

In addition, Japanese Patent Early Publication [kokai] No. 2004-362892 discloses a memory-card socket having the capability of preventing the memory card from jumping out. This socket is provided with a housing having an opening at its one side, a memory-card holder slidably supported in the housing to receive the memory card inserted in the housing through the opening, a coil spring for energizing the memory-card holder in a direction of taking out the memory card, and a lock mechanism for the memory-card holder. The lock mechanism prohibits a movement of the memory-card holder in a taking-out direction when the memory-card holder is in a locking position. However, when the memory-card holder is further pushed inward from the locking position, the lock mechanism can be released. Thus, the memory card can be stably held in the socket as long as the memory-card holder is in the lock position.

In addition, Japanese Patent Early Publication [kokai] No. 2002-101170 discloses a portable telephone, to which an SIM (Subscriber Identify Module) card is detachably attached. The SIM card is issued when a user becomes a member of GSM (Global System for Mobile communications) services. Information about subscriber and telephone company is stored in the SIM card, and the portable telephone becomes available by connecting the SIM card thereto. According to this portable telephone, it is possible to avoid the occurrence of physical damage to the SIM card by use of a wall member for preventing positional displacement of the SIM card in the portable telephone, and a retaining member for preventing accidental falling of the SIM card from the portable telephone.

However, it is the current status that countermeasures are not enough to prevent the corruption of data stored in the memory card caused when the memory card is removed from the portable terminal device in the operating state by mistake. Therefore, the conventional portable terminal devices still have a plenty of room for improvement from this viewpoint.

From document FR 2 811 185 a mobile phone battery set is disclosed, having a replaceable subscriber identity module card receiving board to hold cards of different frequencies. Furthermore, US 2002/0118826 A1 discloses a rear cover for a telephone handset being provided with electronic terminals adapted to enable electronic communication between a SIM card and an electronic circuitry within the telephone. It is also disclosed that the rear cover can additionally provide a housing for a battery.

### SUMMARY OF THE INVENTION

In view of the above problems, a primary concern of the present invention is to provide a portable terminal device having the capability of prohibiting removal of the memory card from the portable terminal device as long as a battery is connected to the portable terminal device.

This object is solved by a portable terminal device according to claim 1, claims 2 to 8 relate to specific realizations of the portable terminal device according to claim 1.

That is, the portable terminal device of the present invention is operable in a connecting state with the memory card and the battery, and comprises:
a housing having a concave, in which the memory card is detachably accommodated;
a receptacle disposed in the housing, into which a plug of the battery is detachably connected;
a contact member configured to electrically contact a terminal of the memory card accommodated in the concave;
a memory-card retainer disposed in the housing so as to be slidable between a release position where removal of the memory card from the concave is permitted, and simultaneously the receptacle is made unusable by a part of the memory-card retainer, and a lock position where the removal of the memory card from the concave is inhibited by another part of the memory-card retainer, and simultaneously a connection or disconnection between the plug and the receptacle is permitted.

According to the present invention, the user cannot perform removal of the memory card from the portable terminal device as long as the plug of the battery is connected to the receptacle of the portable terminal device. In other words, the user must release the connection between the plug of the battery and the receptacle to take out the memory card from the portable terminal device. Therefore, it is possible to prevent a situation that the memory card is removed from the portable terminal device in the operating state by mistake, so that corruption of data stored in the memory card occurs.

As a preferred embodiment of the memory-card retainer of the present invention, it is formed with a base, and a projection extending from a side of the base and preferably configured in an L-shape, and the receptacle is made unusable by the projection when the memory-card retainer is in the release position.

In addition, it is preferred that the memory-card retainer has a knob formed at another side of the base other than the side. By use of the knob, the user can easily perform a sliding motion of the memory-card retainer.

In addition, it is preferred that one of the base and the housing has a boss, which is selectively engaged with one of recesses formed in the other one of the base and the housing, and spaced from each other in a sliding direction of the memory-card retainer, so that the memory-card retainer is allowed to slide in a click stop manner between the release position and the lock position. Alternatively, one of the base and the housing may have a recess, which is selectively engaged with one of bosses formed in the other one of the base and the housing. In these cases, there is an advantage that the user can surely set the memory-card retainer to one of the release position and the lock position.

Additionally, the housing has a battery room, in which the battery is accommodated, and the concave for the memory card is exposed in the battery room. In this case, since the battery is placed in a stacking manner above the memory card accommodated in the concave, it is possible to efficiently use the inner space of the housing. Therefore, it is effective to downsize the portable terminal device.

Moreover, it is preferred that the housing has a second concave communicated with the concave, and a pair of supporting pieces projecting in the second concave, and the memory-card retainer is held in a clearance between a bottom of the second concave and the supporting pieces. In this case, since the sliding motion of the memory-card retainer is guided by the supporting pieces, it is possible to provide a stable sliding motion of the memory-card retainer, while preventing that the memory-card retainer projects in the battery chamber, and interferes with the battery accommodated in the battery room.

In addition, it is preferred that the housing has a guide opening formed at a position adjacent to the receptacle, and the projection of the memory-card retainer passes through the guide opening when the memory-card retainer is moved from the lock position to the release position, so that the receptacle is closed by a part of the projection. In this case, since the receptacle is surely made unusable in the release position by the projection passing through the guide opening, it is possible to further improve the reliability of the portable terminal device of the present invention having the capability of preventing the corruption of data stored in the memory card.

Additional features and advantages brought thereby of the present invention will be clearly understood from the best mode for carrying out the invention described below.

### BRIEF EXPLANATION OF THE DRAWINGS

FIGS. 1A and 1B are front and rear views of a portable terminal device according to a preferred embodiment of the present invention.
FIG. 2 is a block diagram of the portable terminal device.
FIGS. 3A and 3B are front and side views of a rechargeable battery used in the portable terminal device.
FIGS. 4A and 4B are planar views of the portable terminal device with a memory-card retainer in release and lock positions, respectively.
FIGS. 5A to 5C are front and side views of the memory-card retainer, and FIG. 5D is a cross sectional view of the memory-card retainer taken along the line X-X in FIG. 5A.
FIGS 6A and 6B are front and rear perspective views of the memory-card retainer, respectively.
FIGS. 7A and 7B are perspective views showing outer and inner surfaces of a housing of the portable terminal device.
FIGS. 8A and 8B are planar views of a portable terminal device with another memory-card retainer in release and lock positions, respectively.

### BEST MODE FOR CARRYING OUT THE INVENTION

As a preferred embodiment of the present invention, a wireless portable terminal device, to which an SIM card is detachably connected, is explained below in detail, referring to the attached drawings.

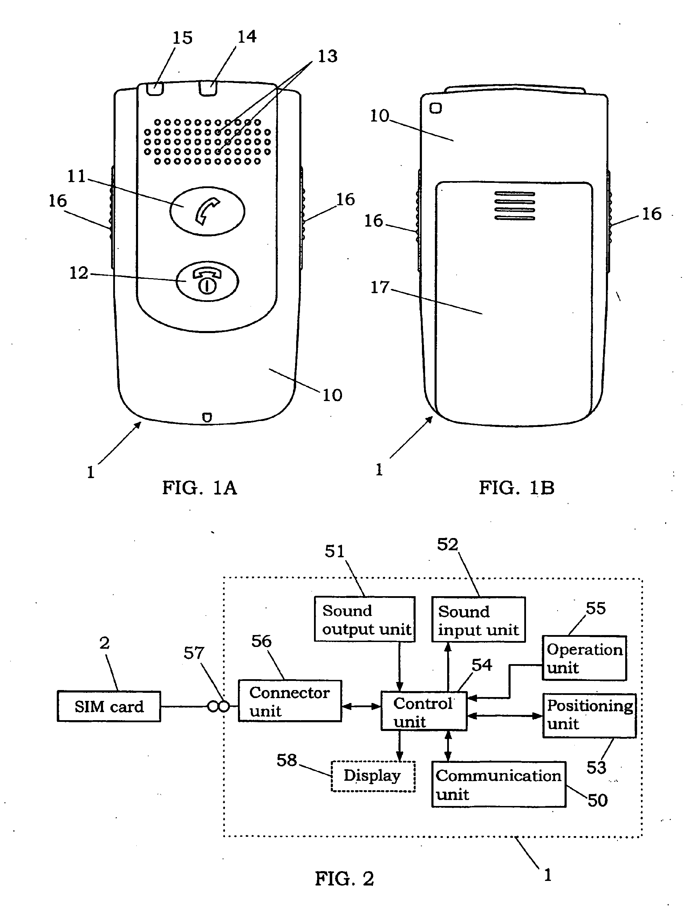

The portable terminal device **1** of this embodiment is operable only when both of an SIM card **2** and a rechargeable battery **3** are connected thereto. As shown in FIGS. 1A and 1B, the portable terminal device **1** has a substantially rectangular housing **10,** which is preferably made of an ABS resin. In the housing **10,** electronic circuits needed to construct a desired terminal communication system are incorporated. For example, as shown in FIG. 2, the terminal communication system is mainly formed by a communication unit **50** for making a mutual communication between the portable terminal device and a wireless station through radio waves, sound output unit **51** such as speaker for converting electric signals into acoustic waves, sound input unit **52** such as microphone for converting acoustic waves into electric signals, positioning unit **53** for performing a position measurement according to signals provided from a GPS (Global Positioning System) satellite, control unit **54** for controlling operations of these units, operation unit **55** for operating functions of the terminal device, and a connector unit **56** having contacts **57** for the SIM card **2** described later. In addition, a display **58** such as LCD (Liquid Crystal Display) may be mounted on the portable terminal device **1** to provide visual information to the user.

As shown in FIG. 1A, an off-hook button **11,** and an on-hook button **12** are provided in a front surface of the portable terminal device **1** as the operation unit **55.** When a user pushes the off-hook button **11,** the control unit **54** establishes the communication between the user and the wireless station according to the subscriber information stored in the SIM card **2.** When the communication is established, the control unit **54** controls the communication unit **50** according to the electric signals provided from the sound input unit **52** to output wireless signals, and also controls the sound output unit **51** according to the wireless signals received by the communication unit **50** to provide sound information to the user. When the user pushes the on-hook button **12,** the wireless communication is finished. If necessary, the on-hook button **12** may have a power switch function. In this case, it is preferred that the portable terminal device **1** is turned on/off by continuously pushing the on-hook button **12** for 1 second or more. In FIG. 1A, the numeral **13** designates a plurality of sound apertures for transmitting acoustic waves between the outside and the inside of the portable terminal device **1.**

In addition, the numerals **(14, 15)** respectively designate a power indicator turned on when the portable terminal device **1** is energized, and a communication indicator turned on when the communication is established. If necessary, a battery indicator may be added to show the remaining charge amount of the battery **3.** These indicators are preferably provided by use of LED (light emitting diode). The numeral **16** designates a pair of GPS buttons disposed at both sides of the portable terminal device **1.** When these GPS buttons **16** are simultaneously pushed, the control unit **54** controls the positioning unit **53** to send the position information of the user to a desired destination (e.g., control center) through radio waves. By allowing a child or an elderly to carry the portable terminal device **1,** this function is useful to search its whereabouts in case of emergency.

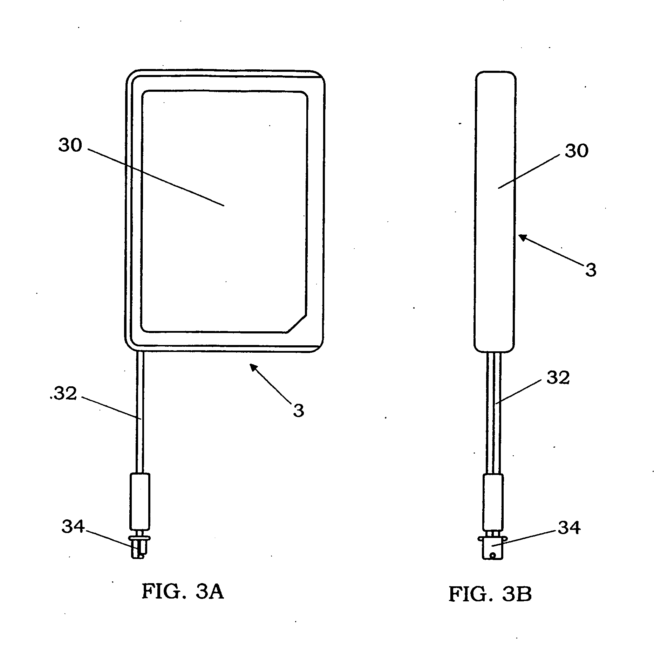

As shown in FIG. 1B, a rear surface of the portable terminal device includes a detachable cover **17.** When the cover **17** is removed from the portable terminal device **1,** the SIM card **2** and the battery **3** can be accommodated in a battery room defined in the housing **10.** As the battery **3,** for example, a lithium-ion battery can be used, which comprises a body **30** having a rectangular flat shape, and a cable **32** extending from the body and having a plug **34** at its top end, as shown in FIGS. 3A and 3B.

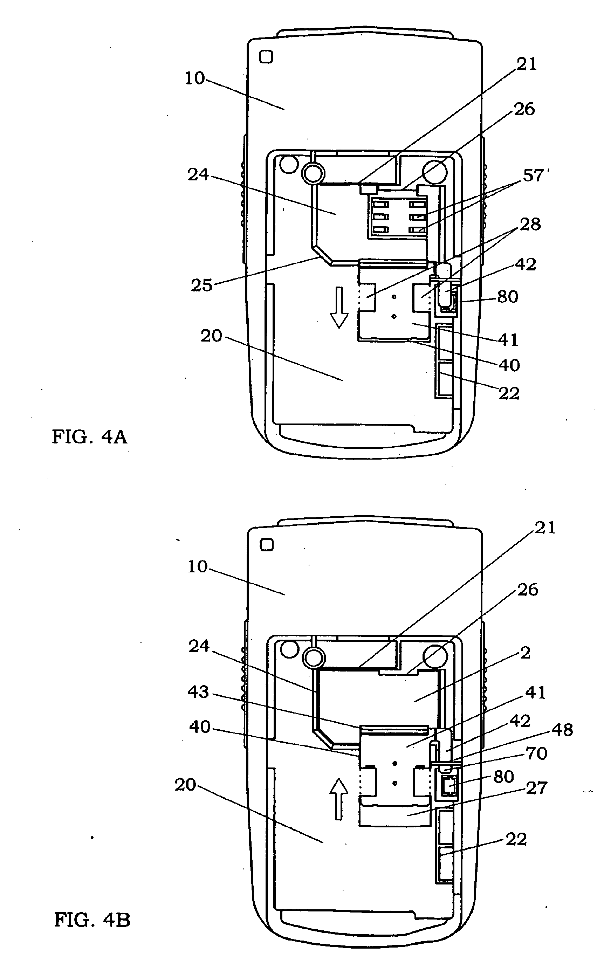

As shown in FIGS. 4A and 4B, the plug **34** is detachably connected to a receptacle **80** disposed in the battery room **20.** Therefore, electric energy is supplied to the portable terminal device **1** through the connection between the plug **34** and the receptacle **80.** Positional displacements of the battery **3** in the battery room **20** are regulated by positioning walls **(21, 22)** formed in the battery room. In addition, the receptacle **80** is disposed adjacent to the positioning wall **22** such that accidental collision between the body **30** of the battery **3** and the receptacle **80** does not occur in the battery room **20.** A charging terminal (not shown) for the battery is mounted at an end portion of the housing **10.** By use of the charging terminal, the battery **3** accommodated in the housing can be charged through the connection between the plug **34** and the receptacle **80.**

In a bottom of the battery room **20,** a concave **24** for accommodating the SIM card **2** therein is formed such that the concave is communicated with the battery room through a top opening of the concave. Therefore, the SIM card **2** is firstly set in the concave **24,** and then the battery **3** is put in the battery room **20** in a stacking manner. A depth of the concave **24** is designed such that the SIM card **2** set in the concave does not interfere with the body **30** of the battery **3** accommodated in the battery room **20.** The contacts **57** described above are disposed in the concave **24** to make electrical connections with terminals of the SIM card **2.** The concave **24** has a similar shape to the SIM card **2,** and is formed to be slightly larger than the SIM card in such a degree that a serious positional displacement of the SIM card does not occur in the concave **24.** In addition, the concave **24** has a chamfered corner portion **25,** which is fitted to a corresponding chamfered corner portion of the SIM card **2** set in the concave. Therefore, it is possible to avoid a situation that the SIM card **2** is improperly set in the concave **24.** The numeral **26** designates a protrusion projecting toward the interior of the concave **24,** which is useful to prevent the SIM card from jumping out from the concave **24.**

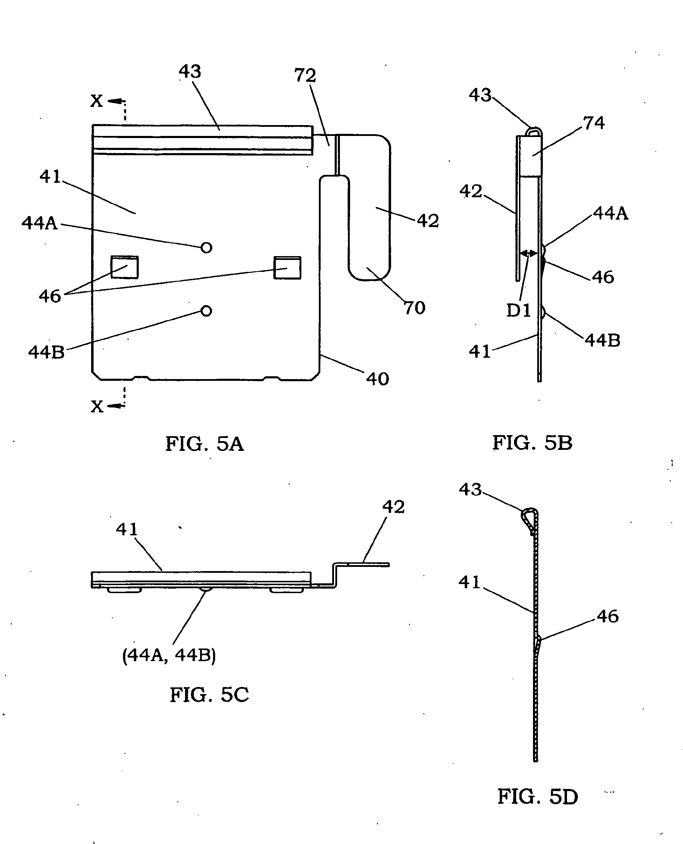

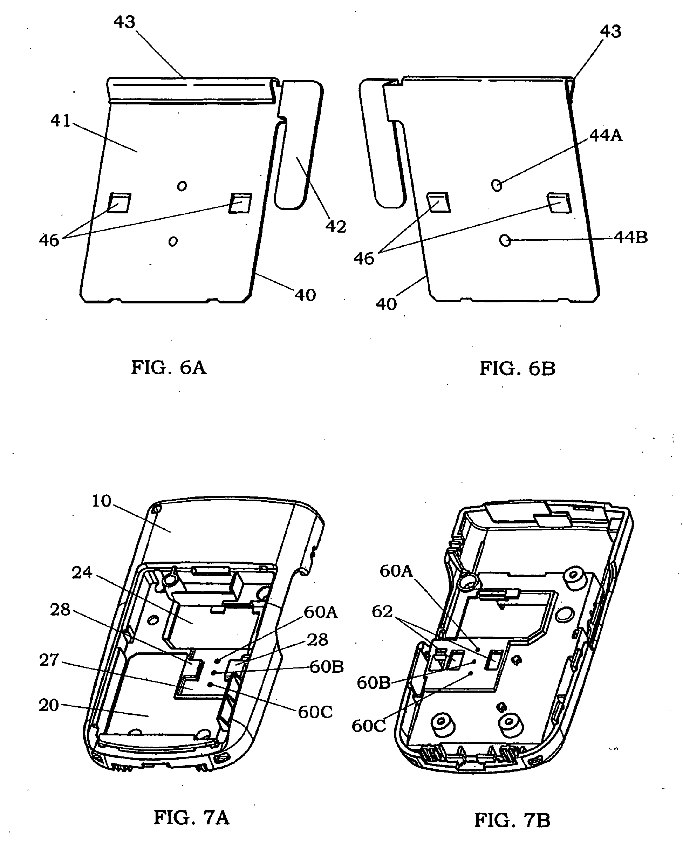

In the bottom of the battery room **20,** a second concave **27** is formed such that one end of the second concave is communicated with a side of the concave **24** for SIM card, and a top opening of the second concave is communicated with the battery room **20.** In the second concave **27,** a memory-card retainer **40** is disposed so as to be slidable between a release position and a lock position of the SIM card **2,** as shown by the arrows in FIGS. 4A and 4B. That is, the memory-card retainer **40** is held in a clearance between a bottom of the second concave **27** and a pair of supporting pieces **28** projecting in the second concave. The memory-card retainer **40** is composed of a base **41** having a rectangular planar shape, and an L-shaped projection **42** extending from a side of the base, as shown in FIGS. 5A to 5D, and FIGS. 6A and 6B.

When the memory-card retainer **40** is positioned in the release position, as shown in FIG. 4A, removal of the SIM card **2** from the concave **24** is permitted, and simultaneously the receptacle **80** is made unusable by the a part of the memory-card retainer **40.** On the other hand, when the memory-card retainer **40** is positioned in the lock position, as shown in FIG. 4B, the removal of the SIM card **2** from the concave **24** is inhibited by another part of the memory-card retainer **40,** and simultaneously a connection or disconnection between the plug **34** and the receptacle **80** is permitted.

In the release position of FIG. 4A, specifically, since one side of the memory card retainer **40** does not project into the concave **24,** the SIM card **2** can be easily removed from the concave **24.** At this time, the receptacle **80** is closed by the L-shaped projection **42,** so that the plug **34** of the battery **3** cannot be connected to the receptacle **80.** In the lock position of FIG. 4B, since the one side of the memory-card retainer **40** projects into the concave **24,** the SIM card **2** cannot be removed from the concave **24.** At this time, the L-shaped projection **42** is moved to open the receptacle **80,** so that the plug **34** of the battery **3** can be connected to the receptacle **80.** In addition, the SIM card **2** is put between a bottom of the concave **24** and the part of the memory-card retainer **40** projected into the concave, so that the terminals of the SIM card **2** stably make electrical connections with the contacts **57** disposed in the concave **24.**

Thus, according to the sliding mechanism for the memory-card retainer **40** of the present invention, when the removal of the SIM card **2** from the portable terminal device **1** is permitted, the connection between the receptacle **80** and the plug **34** is inhibited, and when the connection or disconnection between the plug **34** and the receptacle **80** is permitted, the removal of the SIM card **2** from the portable terminal device **1** is inhibited. Therefore, even if the user tries to move the memory-card retainer **40** from the lock position to the release position under the condition that the plug **34** is connected to the receptacle **80,** the L-shaped projection **42** collides with the plug **34** connected to the receptacle **80,** so that the release position cannot be obtained. Thus, since the SIM card **2** can not be set in or removed from the portable terminal device **1** as long as the plug **34** is connected to the receptacle **80,** it is possible to avoid an inconvenience that the corruption of data stored in the SIM card is caused when the SIM card **2** is removed from the conventional portable terminal device in the connecting state with the battery.

The memory-card retainer **40** can be formed by punching and bending a metal plate. The numeral **43** designates a knob formed by bending an end portion of the base **41.** By use of the knob **43,** the user can readily perform the sliding motion of the memory-card retainer **40.**

In FIGS. 5A to 5D, 6A and 6B, the numerals **(44A, 44B)** designates bosses formed on the base **41** to be spaced from each other in a sliding direction of the memory-card retainer **40.** These bosses **(44A, 44B)** are used to allow the memory-card retainer **40** to slide in a click-stop manner in the second concave **27.** In the bottom of the second concave **27,** a plurality of recesses **(60A∼60C)** are formed such that each of the bosses **(44A, 44B)** is selectively engaged with one of the recesses. Therefore, by appropriately determining the positions of the recesses **(60A∼60C),** the memory-card retainer **40** can be moved in the click-stop manner between the release position and the lock position. In this embodiment, as shown in FIGS. 7A and 7B, two bosses **(44A, 44B)** are engaged to two **(60A, 60B)** of three recesses **(60A∼60C)** in the lock position, and on the other hand, the bosses **(44A, 44B)** are engaged to another two **(60B, 60C)** of these recesses in the release position. For example, the bosses **(44A, 44B)** can be formed on the base **41** by embossing. If necessary, a plurality of recesses formed in the base of the memory-card retainer **40** may be engaged to bosses formed on the bottom of the second concave **27** to obtain the same click-stop mechanism described above. As a result, there is an advantage that the user can easily set the memory-card retainer **40** to the release position or the lock position.

In addition, the memory-card retainer **40** has a pair of bumps **46** formed on the base **41.** On the other hand, a pair of ditches **62** are formed in the bottom of the second concave **27.** These bumps and ditches **(46, 62)** are used as a stopper for preventing an overrun of the memory-card retainer **40** in the sliding direction. That is, each of the bumps **46** is formed in a substantially triangular shape with a steep slope at a side facing the concave **24** for SIM card, and a gentle slope at the opposite side, as shown in FIG. 5D. In the case of mounting the memory-card retainer **40** in the second concave **27,** the gentle slopes of the bumps **46** are firstly pressed against the supporting pieces **28,** so that an elastic deformation of the supporting pieces is caused along the gentle slope, and the clearance between the bottom of the second concave **27** and the supporting pieces **28** is gradually opened up. When the bumps **46** are fitted in the ditches **62** of the second concave **27,** the elastic deformation of the supporting pieces **28** is released, so that the memory-card retainer **40** is stably disposed in the second concave **27.** Thus, by use of the gentle slopes of the bumps **46,** the mounting operation of the memory-card retainer **40** is easily performed.

When the memory-card retainer **40** is moved between the lock position and the release position, the bumps **46** are movable in the ditches **62.** However, when the memory-card retainer **40** is excessively moved toward the concave **24** for SIM card, the steep slopes of the bumps **46** collide with the housing at ends of the ditches **62** to prevent an excessive intrusion of the memory-card retainer **40** into the concave **24.** Therefore, by appropriately determining the length of the ditches **62** in the sliding direction, the engagements between the bumps **46** and the ditches **62** provide a stopper function for the memory-card retainer **40.**

In this embodiment, as shown in FIGS. 5A to 5D, the L-shaped projection **42** is composed of a cover plate **70** used to close the receptacle **80** in the release position of the memory card retainer **40,** and a coupling portion **72** extending between the base **41** and the cover plate **70.** The coupling portion **72** includes a vertical wall **74** for spacing the cover plate **70** from the base **41** by a required vertical distance **D1**. Therefore, if when the receptacle **80** is positioned at a different height from the base **41** of the memory-card retainer **40,** the receptacle **80** can be closed by the cover plate **70** spaced from the base **41** by a suitable vertical distance **D1.** As a result, it is possible to achieve an improvement in degree of freedom of layout of the receptacle **80** in the portable terminal device **1**.

In FIG. 4B, the numeral **48** designates a guide projection formed adjacent to the receptacle **80** and having a rectangular opening at its top end portion, through which the cover plate **70** of the L-shaped projection **42** passes when the memory-card retainer **40** is moved between the lock position and the release position. In this case, since the cover plate **70** is guided to a position adequate for closing the receptacle **80** by help of the rectangular opening of the guide projection **48,** the release position of the memory-card retainer 40 can be surely obtained. In addition, there is another advantage of preventing a warpage of the cover plate **70.**

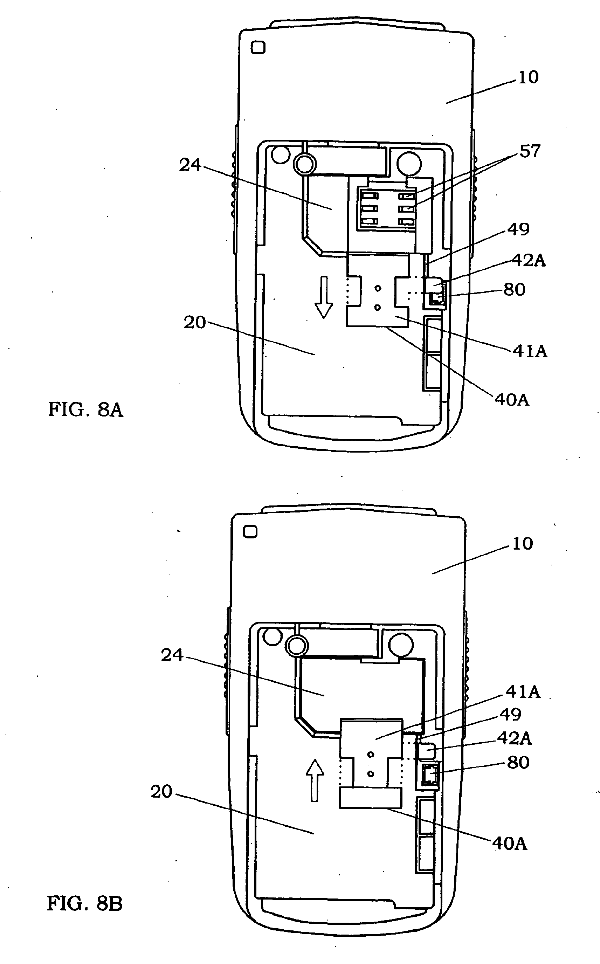

The memory-card retainer **40** is not restricted to the structure explained in the above embodiment. For example, as shown in FIGS. 8A and 8B, a memory-card retainer **40A** according to a modification of this embodiment is formed with a base plate **41A** having a rectangular shape and a projection **42A** extending perpendicularly from a side of base plate. In this case, it is preferred that the housing **10** has a slit **49** for guiding the projection **42A** to the receptacle **80** when the memory-card retainer **40A** is moved from the lock position (FIG. 8B) toward the release position (FIG. 8A).

### INDUSTRIAL APPLICABILITY

As understood from the above-preferred embodiments, according to the portable terminal device of the present invention, the corruption of data stored in the memory card can be prevented from occurring by use of the memory-card retainer, which is slidable between the release position and the lock position. Therefore, the present invention is expected to further facilitate the widespread use of portable terminal devices.

## Claims

1. A portable terminal device operable in a connecting state with a memory card and a battery (3), said battery (3) including a body (30) and a cable (32) which extends from said body (30) and which has a plug (34) at one end of said cable (32), the portable terminal device comprising:
a housing having a battery room (20) and a concave (27), said battery room (20) accommodating said battery (3), said concave (27) being shaped to detachably accommodate therein said memory card and provided with a contact member (56, 57) for electrical contact with a terminal of said memory card (2) accommodated in said concave;
a receptacle (80) disposed in said housing, into which a plug (34) of said battery (3) is detachably connected,
**characterized in that** it further comprises
a memory-card retainer (40) disposed in said housing so as to be slidable between a release position where removal of said memory card from said concave (27) is permitted, and simultaneously said receptacle is made unusable by a first part of said memory-card retainer (40), and a lock position where the removal of said memory card from said concave (27) is inhibited by a second part of said memory-card retainer (40), and simultaneously a connection or disconnection between said plug (34) and said receptacle (80) is permitted
wherein said memory-card retainer (40) comprises a base (41), and a projection (42) extending from a side of said base (41) to define said first part, and wherein said receptacle is made unusable by said projection when said memory-card retainer (40) is in said release position,
wherein said memory-card retainer (40) is in said lock position, said projection of the memory-card retainer (40) opens the receptacle, so that a connection or disconnection between the plug (34) and receptacle (80) is permitted, and
when said memory-card retainer (40) is in said release position, said projection of said memory-card retainer (40) closes the receptacle (80) so that said plug (34) is not connected to the receptacle (80).

2. The portable terminal device as set forth in claim 1, wherein said projection (42) is configured in an L-shape.

3. The portable terminal device as set forth in claim 1, wherein said memory-card retainer (40) has a knob formed at another side of said base other than the side having said projection (42) to facilitate a sliding motion of said memory-card retainer (40).

4. The portable terminal device as set forth in claim 1, wherein one of said base and said housing has a boss, which is selectively engaged with one of recesses formed in the other one of said base and said housing and spaced from each other in a sliding direction of said memory-card retainer (40), so that said memory-card retainer (40) is allowed to slide in a click stop manner between said release position and said lock position.

5. The portable terminal device as set forth in claim 1, wherein one of said base and said housing has a recess, which is selectively engaged with one of bosses formed in the other one of said base and said housing and spaced from each other in a sliding direction of said memory-card retainer (40), so that said memory-card retainer (40) is allowed to slide in a click stop manner between said release position and said lock position.

6. The portable terminal device as set forth in claim 1, wherein said housing has a battery room (20), in which said battery (3) is accommodated, and wherein said concave (27) for said memory card is exposed in said battery room.

7. The portable terminal device as set forth in claim 6, wherein said housing has a second concave communicated with said concave (27), and a pair of supporting pieces projecting in said second concave, and wherein said memory-card retainer (40) is held in a clearance between a bottom of said second concave and said supporting pieces.

8. The portable terminal device as set forth in claim 1, wherein said housing has a guide opening formed at a position adjacent to said receptacle (80), and wherein said projection (42) of said memory-card retainer (40) passes through said guide opening when said memory-card retainer (40) is moved from the lock position to the release position, so that said receptacle (80) is closed by a part of said projection (42).

## Patentansprüche

1. Tragbare Endgerätevorrichtung, die in einem Verbindungszustand mit einer Speicherkarte und einer Batterie (3) betriebsbereit ist, wobei die Batterie (3) einen Rumpf (30) und ein Kabel (32) aufweist, das sich von dem Rumpf (30) erstreckt und das einen Stecker (34) an einem Ende des Kabels (32) hat, wobei die tragbare Endgerätevorrichtung folgendes umfasst:
ein Gehäuse mit einem Batterieraum (20) und einer Höhlung (27), wobei der Batterieraum (20) die Batterie (3) aufnimmt, und wobei die Höhlung (27) geformt ist, um darin die Speicherkarte abnehmbar aufzunehmen, und mit einem Kontaktelement (56, 57) für elektrischen Kontakt mit einem Anschluss der Speicherkarte (2), die in der Höhlung aufgenommen ist, versehen ist;
eine Steckerbuchse (80), die in dem Gehäuse angeordnet ist, in der ein Stecker (34) der Batterie (3) abnehmbar verbunden ist,
**dadurch gekennzeichnet, dass** sie ferner folgendes umfasst:
einen Speicherkartenhalter (40), der in dem Gehäuse derart angeordnet ist, dass er zwischen einer Freigabeposition, in der ein Entfernen der Speicherkarte aus der Höhlung (27) erlaubt ist und gleichzeitig die Steckerbuchse durch einen ersten Abschnitt des Speicherkartenhalters (40) unverwendbar gemacht ist, und einer Verschlussposition verschiebbar ist, in der das Entfernen der Speicherkarte aus der Höhlung (27) durch einen zweiten Abschnitt des Speicherkartenhalters (40) verhindert wird und gleichzeitig eine Verbindung oder Trennung zwischen dem Stecker (34) und der Steckerbuchse (80) erlaubt ist,
wobei der Speicherkartenhalter (40) eine Basis (41) und einen Vorsprung (42) umfasst, der sich von einer Seite der Basis (41) erstreckt, um den ersten Abschnitt zu definieren, und wobei die Steckerbuchse durch den Vorsprung unverwendbar gemacht ist, wenn sich der Speicherkartenhalter (40) in der Freigabeposition befindet,
wobei sich der Speicherkartenhalter (40) in der Verschlussposition befindet, der Vorsprung des Speicherkartenhalters (40) die Steckerbuchse derart öffnet, dass eine Verbindung oder Trennung zwischen dem Stecker (34) und der Steckerbuchse (80) erlaubt ist, und
wenn sich der Speicherkartenhalter (40) in der Freigabeposition befindet, der Vorsprung des Speicherkartenhalters (40) die Steckerbuchse (80) derart schließt, dass der Stecker (34) nicht mit der Steckerbuchse (80) verbunden ist.

2. Tragbare Endgerätevorrichtung nach Anspruch 1, wobei der Vorsprung (42) in einer L-Form konfiguriert ist.

3. Tragbare Endgerätevorrichtung nach Anspruch 1, wobei der Speicherkartenhalter (40) einen Griff an einer anderen Seite der Basis geformt hat, die eine andere als die Seite mit dem Vorsprung (42) ist, um eine Verschiebebewegung des Speicherkartenhalters (40) zu vereinfachen.

4. Tragbare Endgerätevorrichtung nach Anspruch 1, wobei eines aus der Basis und dem Gehäuse einen Buckel aufweist, der selektiv mit einer von Aussparungen in Eingriff steht, die in dem anderen aus der Basis und dem Gehäuse geformt sind und voneinander in einer Verschieberichtung des Speicherkartenhalters (40) beabstandet sind, so dass es dem Speicherkartenhalter (40) erlaubt ist, sich einrastend zwischen der Freigabeposition und der Verschlussposition zu verschieben.

5. Tragbare Endgerätevorrichtung nach Anspruch 1, wobei eines aus der Basis und dem Gehäuse eine Aussparung aufweist, die mit einem von Buckeln selektiv in Eingriff steht, die in dem anderen aus der Basis und dem Gehäuse geformt sind und voneinander in einer Verschieberichtung des Speicherkartenhalters (40) beabstandet sind, so dass es dem Speicherkartenhalter (40) erlaubt ist, sich einrastend zwischen der Freigabeposition und der Verschlussposition zu verschieben.

6. Tragbare Endgerätevorrichtung nach Anspruch 1, wobei das Gehäuse einen Batterieraum (20) aufweist, in dem die Batterie (3) aufgenommen ist, und wobei die Höhlung (27) für die Speicherkarte in dem Batterieraum freiliegend ist.

7. Tragbare Endgerätevorrichtung nach Anspruch 6, wobei das Gehäuse eine zweite Höhlung, die mit der ersten Höhlung (27) in Kommunikation steht, und ein Paar von Stützteilen aufweist, die in die zweite Höhlung vorspringen, und wobei der Speicherkartenhalter (40) in einem Freiraum zwischen einem Boden der zweiten Höhlung und den Stützteilen gehalten ist.

8. Tragbare Endgerätevorrichtung nach Anspruch 1, wobei das Gehäuse eine Führöffnung aufweist, die an einer Position neben der Steckerbuchse (80) geformt ist, und wobei der Vorsprung (42) des Speicherkartenhalters (40) durch die Führöffnung läuft, wenn der Speicherkartenhalter (40) aus der Verschlussposition in die Freigabeposition bewegt wird, so dass die Steckerbuchse (80) durch einen Abschnitt des Vorsprungs (42) geschlossen wird.

## Revendications

1. Dispositif de terminal portatif pouvant fonctionner dans un état de connexion avec une carte mémoire et une batterie (3), ladite batterie (3) comportant un corps (30) et un câble (32) qui s'étend dudit corps (30) et qui a un connecteur (34) au niveau d'une extrémité dudit câble (32), le dispositif de terminal portatif comprenant:
un logement ayant un compartiment (20) pour batterie et une concavité (27), ledit compartiment (20) pour batterie accueillant ladite batterie (3), ladite concavité (27) étant conformée pour y accueillir de manière amovible ladite carte mémoire et dotée d'un élément de contact (56, 57) pour un contact électrique avec une borne de ladite carte mémoire (2) reçue dans ladite concavité;
un réceptacle (80) disposé dans ledit logement, dans lequel un connecteur (34) de ladite batterie (3) est connecté de manière amovible,
**caractérisé en ce qu'**il comprend en plus
un dispositif (40) de retenue de la carte mémoire disposé dans ledit logement de manière à être coulissant entre une position de libération autorisant le retrait de ladite carte mémoire de ladite concavité (27), et simultanément ledit réceptacle devient inutilisable par une première partie dudit dispositif de (40) retenue de la carte mémoire, et une position de verrouillage empêchant le retrait de ladite carte mémoire de ladite concavité (27) par une deuxième partie dudit dispositif (40) de retenue de la carte mémoire, et simultanément une connexion ou une déconnexion entre ledit connecteur (34) et ledit réceptacle (80) est autorisée,
où ledit dispositif (40) de retenue de la carte mémoire comprend une base (41), et une projection (42) s'étendant d'un côté de ladite base (41) afin de définir ladite première partie, et où ledit réceptacle devient inutilisable par ladite projection lorsque ledit dispositif (40) de retenue de la carte mémoire se trouve dans ladite position de libération,
où ledit dispositif (40) de retenue de la carte mémoire se trouve dans ladite position de verrouillage, ladite projection du dispositif (40) de retenue de la carte mémoire ouvre le réceptacle, de sorte à autoriser une connexion ou une déconnexion entre le connecteur (34) et le réceptacle (80), et
lorsque ledit dispositif (40) de retenue de la carte mémoire se trouve dans ladite position de libération, ladite projection dudit dispositif (40) de retenue de la carte mémoire ferme le réceptacle (80) de sorte que ledit connecteur (34) ne soit pas connecté au réceptacle (80).

2. Dispositif de terminal portatif selon la revendication 1, dans lequel ladite projection (42) est configurée sous la forme d'un L.

3. Dispositif de terminal portatif selon la revendication 1, dans lequel ledit dispositif (40) de retenue de la carte mémoire a un bouton formé au niveau d'un autre côté de ladite base autre que le côté ayant ladite projection (42) afin de faciliter un mouvement de glissement dudit dispositif (40) de retenue de la carte mémoire.

4. Dispositif de terminal portatif selon la revendication 1, dans lequel l'un parmi ladite base et ledit logement a un bossage, qui est engagé sélectivement avec l'un parmi des évidements formés dans l'autre élément parmi ladite base et ledit logement et espacés l'un de l'autre dans une direction de glissement dudit dispositif (40) de retenue de la carte mémoire, de sorte que ledit dispositif (40) de retenue de la carte mémoire soit autorisé à coulisser selon un mode d'encliquetage d'arrêt entre ladite position de libération et ladite position de verrouillage.

5. Dispositif de terminal portatif selon la revendication 1, dans lequel l'un parmi ladite base et ledit logement a un évidement, qui est engagé sélectivement avec l'un des bossages formés dans l'autre élément parmi ladite base et ledit logement et espacés l'un de l'autre dans une direction de glissement dudit dispositif (40) de retenue de la carte mémoire, de sorte que ledit dispositif (40) de retenue de la carte mémoire soit autorisé à coulisser selon un mode d'encliquetage d'arrêt entre ladite position de libération et ladite position de verrouillage.

6. Dispositif de terminal portatif selon la revendication 1, dans lequel ledit logement a un compartiment (20) pour batterie, dans lequel ladite batterie (3) est reçue, et où ladite concavité (27) pour ladite carte mémoire est exposée dans ledit compartiment pour batterie.

7. Dispositif de terminal portatif selon la revendication 6, dans lequel ledit logement a une deuxième concavité se mettant en communication avec ladite concavité (27), et une paire de pièces de soutien se projetant dans ladite deuxième concavité, et où ledit dispositif (40) de retenue de la carte mémoire est maintenu dans un jeu entre un fond de ladite deuxième concavité et lesdites pièces de soutien.

8. Dispositif de terminal portatif selon la revendication 1, dans lequel ledit logement a une ouverture de guidage formée au niveau d'une position adjacente audit réceptacle (80), et où ladite projection (42) dudit dispositif (40) de retenue de la carte mémoire passe à travers ladite ouverture de guidage lorsque ledit dispositif (40) de retenue de la carte mémoire est déplacé de la position de verrouillage à la position de libération, de sorte que ledit réceptacle (80) soit fermé par une partie de ladite projection (42).
